Europäisches Patentamt

European Patent Office

Office européen des brevets

(11) Publication number: 0 359 129
A2

# EUROPEAN PATENT APPLICATION

(21) Application number: 89116548.2

(22) Date of filing: 07.09.89

(51) Int. Cl.5 **C08G 81/02 , C09D 11/10 , C08L 77/00**

(30) Priority: 07.09.88 US 241533

(43) Date of publication of application:
21.03.90 Bulletin 90/12

(84) Designated Contracting States:
AT BE CH DE ES FR GB IT LI NL SE

(71) Applicant: **BASF Corporation**
**9 Campus Drive**
**Parsippany, NJ 07054(US)**

(72) Inventor: **Stone, Edward**
**4 Inwood Road**
**Morris Plains New Jersey 07950(US)**
Inventor: **Wasyliw, Basil**
**225 Ellery Avenue**
**Newark New Jersey 07016(US)**
Inventor: **Incontro, Richard C.**
**31 Pine Street**
**Ridgefield Park New Jersey 07660(US)**
Inventor: **Giunta, John P.**
**549 Mable Street**
**New Milford New Jersey 07646(US)**

(74) Representative: **Welzel, Gunther, Dr. et al**
**c/o BASF Aktiengesellschaft**
**Carl-Bosch-Strasse 38**
**D-6700 Ludwigshafen(DE)**

(54) Modified polyamide compositions, their preparation and printing inks containing them.

(57) New modified carboxylated polyamide compositions are obtainable by fusing a mixture of a polyamide of the type usable for printing inks (A) and an organic compound containing carboxyl groups (B) such as a maleated rosin at a temperature of 180-250 °C. The resulting compositions can be used in water or solvent ink systems having improved properties and are of particular advantage in inks for surface printing on polyolefin films.

EP 0 359 129 A2

## Modified Polyamide Compositions, their Preparation and Printing Inks containing them

The present invention relates to modified polyamide compositions, their preparation and use.

The modification of synthetic polyamide products of high average molecular weight, such as fibers, films and fabrics composed of nylon, as well as of natural polyamide products such as wool, silk, and natural leather, by means of a graft polymerization treatment, particularly with acrylic and methacrylic acids, has been described in various references such as U.S. Patents 3,297,471, 4,369,036 and 3,188,228. The objective of these patents is to impart to the crystalline, solvent-insoluble polyamide product desirable properties such as hygroscopicity, thermal stability, antistatic properties, and soil resistance, without essentially changing the solubility properties of the polyamide. This is achieved by grafting acrylic materials, at various levels of efficiency, onto the polyamide product by either chemical or physical processes, followed by the removal of ungrafted acrylic oligomers and (co)polymers as well as of unreacted acrylic monomers.

In EP-A 194,889 a process for modifying a polyamide resin is disclosed by reaction of a polyamide with a vinyl monomer in an alcohol solution in the presence of an initiator for free radical grafting such as an organic peroxide at a reaction temperature in the range from about 100°C to about 115°C. This reaction leads to a reaction mixture containing a blend of resinous materials, including unreacted polyamide resin, a novel graft polymer, and associatively-formed but ungrafted addition polymer.

This prior grafting polymerization technique has resulted in the preparation of modified polyamides useful in ink formulations. However, these modified polyamides have some disadvantages, e.g. some residual toxicity due to residual monomers and the presence of some residual peroxide catalyst decomposition products.

We have now found that modified carboxylated polyamide compositions which do not have the said disadvantages are obtainable by fusing a mixture of a polyamide (A) and an organic compound containing carboxyl groups (B) at a temperature of about 180-250°C.

Another object of this invention is to disclose a process for the manufacture of such modified carboxylated polyamide compositions which is easily carried out and makes it possible to modify commercially available polyamides, so far useful as vehicles in solvent laminating inks or solvent inks for surface printing on plastic films, by condensation reactions such as amidation, imidation or transamidation to such an extent that the resulting compositions are water-borne and suitable as vehicles in aqueous ink systems.

According to the process of this invention the polyamide of choice (A) is fused in a desired ratio, preferably with an amount of 70 to 120% w/w of the amount of the polyamide, of at least one organic compound containing carboxyl groups (B) at a temperature of about 180-250°C and preferably about 200-240°C. The fusion reaction is carried on long enough to produce a new carboxylated polyamide resin (reaction product) which after reaction with ammonia and/or amines can be dissolved or dispersed in water, or in a compliant water/alcohol solution. Preferably the fusion reaction is carried out for a time period of about 1-3 hours. The resulting reaction products have a weight average molecular weight of from about 1,000 to about 200,000 and more preferably from about 1,500 to about 40,000.

As polyamides (A) for the manufacture of the modified carboxylated polyamide compositions according to this invention the polyamides suitable for use in printing inks can be used. Suitable are e.g. polyamides made from polymeric fatty acids, alkylene diamines and monocarboxylic acids as described in US-A 3,412,115 or polyamides used in flexographic printing inks and made from dimerized fatty acids, dicarboxylic acids, polyamines and monocarboxylic acids.

Preferred dicarboxylic acids for the production of such polyamides are aliphatic and cycloaliphatic dicarboxylic acids having 6 to 12 carbon atoms, and preferred diamines and polyamines are aliphatic or cycloaliphatic, such as ethylendiamine, ethylenetriamine and cyclohexane-bis(methylamine).

Very suitable polyamides are prepared from dimerized fatty acid, azelaic acid and/or adipic acid, ethylene diamine and piperazine, and propionic acid. Preferred polyamides for the preparation of the composition of this invention are soluble in alcohols such as isopropanol or solvent mixtures containing alcohol.

Suitable commercially available amorphous polyamides are e.g. Versamide® made by Schering AG or General Mills, Inc., which are made by polycondensation of di- and trimerized unsaturated fatty acids and polyamine and are suitable for printing inks, furthermore Polyamide GAX-340 or Macromelt® hot-melt adhesives made by Henkel, such as Macromelt® 6238, having a viscosity of 4500 at a temperature of 210°C, or Macromelt® 6239 or 6240.

Preferred organic compounds containing carboxyl groups (B) are maleated, fumarated, itaconated or

2

acrylated resins or generally speaking reaction products/adducts of rosin and olefinically unsaturated organic acids, preferably those having 3 to 6 carbon atoms or anhydrides thereof, such as acrylic acid or maleic anhydride. Maleated rosin is preferably made by Diels Alder addition of 1 mole of rosin and 1 mole of maleic anhydride at a temperature of about 175-200°C.

Suitable rosin products are gum rosin and tall oil rosin, such as the tall oil rosin ACINTOL R sold by Arizona Chemical Company, New York.

Other very suitable organic compounds containing carboxyl groups (B) for the manufacture of the modified carboxylated polyamides of this invention are styrene or acrylic copolymers having carboxyl groups which are soluble in aqueous ammonia, such as copolymers of styrene and maleic anhydride (monomer ratio 1/1 to 3/1) having an acid number in the range of from 100 to 500 and a melting range of from about 50 to about 170, e.g. the SMA-3000 Styrene-Maleic anhydride Resin of ARCO/Chemical Company.

Furthermore, organic acids, in particular polycarboxylic acids such as citric acid, can be used as compound (B).

The resulting modified carboxylated polyamide compositions of this invention have, in comparison to the usual polyamides used in inks, an increased glass temperature, which improves their heat and block resistance. The applications in which they can be used include vehicles for aqueous or solvent flexo/gravure ink systems, such as extrusion, adhesive and thermal laminating inks and the inks for surface printing on polyolefin films. They can also be applied in the solvent or water ink systems as pigment dispersants. In publication gravure, the resins of this invention can be utilized in high hold-out inks for printing on uncoated, light-weight paper stock.

The modified carboxylated polyamide compositions of this invention in the form of an ammonium or amine salt are particularly suitable for use in water-borne printing inks in admixture with a water-soluble ammonium or amine salt of a carboxyl-group-containing styrene and/or acrylic copolymer having a glass temperature in the range of from +20 to +105°C and a molecular weight in the range from 30,000 to 300,000. Preferably the modified polyamide compositions are used in an amount of 5-20, preferably 7-10% w/w of the total binder resin amount. Such water-based surface and lamination printing ink compositions show in printing onto substrates such as plastics substrates superior properties with respect to the printing aptitude and color strength.

In order to produce an ink composition containing the modified carboxylated polyamide composition and the copolymers described in the preceding paragraph in general a vehicle is first prepared by dissolving the copolymer in ammoniated water. Subsequently, this vehicle is mixed with an aqueous solution of the modified carboxylated polyamide composition, and then a pigment or dyestuff is dispersed in the resulting mixture, followed by the addition of wax, antifoaming agent, surfactant(s) and plasticizer and further adding water as the occasion demands to thereby adjust such properties as viscosity, color appearance, etc.

The modified carboxylated polyamide compositions are an essential ingredient in the foundation and are responsible for their good adhesion, clean printing, excellent film wetting, and superior resolubility.

The following examples are illustrative of the principle and practice of this invention although not limited thereto. Parts and percentages used are parts and percentages by weight.

| EXAMPLE 1 | | |
|---|---|---|
| | Parts/Weight | |
| A | 13.59 | Gum Rosin (WW) |
| B | 3.19 | Maleic Anhydride |
| C | 16.78 | Polyamide GAX-340 |
| D | 58.14 | Deionized Water |
| E | 8.30 | Ammonia |
| | 100.00 | |

PROCEDURE

A laboratory reactor is charged with A. The heat and nitrogen are switched on. When A is partially melted, the agitation is carefully applied to avoid charring. When A is all fluid, B is added at about 120-130°C, with the heat turned off. The temperature rises spontaneously to about 160-175°C. The heat is reapplied and the temperature is raised to 200°C. It is kept at this level for 2 hours. With the heat kept on, item C is gradually charged into reactor to permit uninterrupted agitation and prompt melting of this resin. After all of C is melted, the temperature is raised to 230°C and kept at this level for one hour. The solution of D and E is then added carefully with the heat and nitrogen blanket turned off and the reflux condenser with cooling water turned on. A vigorous agitation is applied. The batch goes through the pasty, thick stage. Thereafter, it clears up and the product becomes an aqueous solution. A sample is characterized and the batch is adjusted to the required pH and solids.

| EXAMPLE 2 | | |
|---|---|---|
| | Parts/Weight | |
| A | 12.43 | Gum Rosin (WW) |
| B | 2.92 | Maleic Anhydride |
| C | 19.62 | Versamid 100 |
| D | 3.67 | Ammonia (29%) |
| E | 16.08 | t-Butyl Alcohol |
| F | 45.28 | Deionized Water |
| | 100.00 | |

## PROCEDURE

A laboratory reactor is charged with A. The heat and nitrogen are turned on. When A is partially melted, the agitation is carefully applied to avoid charring. When A is completely fluid, B is added at about 120-130°C, with the heat turned off. The temperature rises spontaneously to about 160-175°C. The heat is reapplied and the temperature is raised to 200°C. It is kept at this level for 2 hours.

With the mild heat kept on, item C is gradually charged into reactor at a rate that keeps foaming under control and does not cause resolidification. After all of C is added, the temperature is raised to 230°C and kept at this level for one hour. The resin is cast and cooled down.

The cold, hard resin is broken and charged into reactor. The solution of D, E and F is added. A mild heat is applied. The agitation is started as soon as possible (below the boiling point of solution). The temperature is raised to about 70-80°C and kept constant. When all the resins is dissolved, the batch is cooled and discharged. The hard resin is soluble in a low boiling alcohol and the solution can be used in inks for printing on plastic films.

| EXAMPLE 3 | | |
|---|---|---|
| | Parts/Weight | |
| A | 15.66 | Polyamide GAX-340 (Henkel) |
| B | 15.66 | SMA-3000 Styrene Maleic Anhydride Resin (Arco) |
| C | 3.55 | Ammonia (29%) |
| D | 54.69 | Deionized Water |
| E | 10.44 | t-Butyl Alcohol |
| | 100.00 | |

## PROCEDURE

A and B are charged into reactor, with nitrogen blanket and moderate heat turned on. As melting proceeds, the batch ingredients appear to be incompatible. The temperature is raised gradually to 240°C. The agitation is started, as soon as possible, to avoid charring of the resin. Clarity of the melt slowly improves. The batch is run at 240°C for one hour.

The resin is cast and cooled to room temperature. It is then broken and recharged into reactor. The solution of C, D and E is added. The temperature is gradually raised to 80°C and the agitation is applied, at first cautiously, then more vigorously. When the solid resin is dissolved, the batch is characterized and the adjustments in pH and solids are made.

| EXAMPLE 4 | | |
|---|---|---|
| | Parts/Weight | |
| A | 10.92 | Gum Rosin (WW) |
| B | 2.56 | Maleic Anhydride |
| C | 13.49 | Polyamide GAX-340 (Henkel) |
| D | 2.84 | Diethanolamine |
| E | 4.07 | Ammonia (29%) |
| F | 53.36 | Deionized Water |
| G | 12.76 | t-Butyl Alcohol |
| | 100.00 | |

PROCEDURE

A laboratory reactor is charged with A. The heat and nitrogen are switched on. When A is partially melted, the agitation is carefully applied to avoid charring. When A is completely fluid, B is added at about 120-130°C, with the heat turned off. The temperature rises spontaneously to about 160-175°C. The heat is reapplied and the temperature is raised to 200°C. It is kept at this level for 2 hours. With the heat turned on, the item C is gradually charged into reactor to permit uninterrupted agitation and retain the fluidity of the batch. After all of C is melted, the temperature is raised to 230°C and kept at this level for one hour.

The batch is then cooled to about 160°C and the item D is added. The temperature is raised gradually to 175-180°C and the distillate is collected. The acid number is determined. When it gets to 45 or lower the batch is discharged.

The cold, hard resin is broken and charged back into reactor. The solution of E, F and G is added. A mild heat is applied. The agitation is started as soon as possible (below the boiling point of the solution). The temperature is raised to about 70-80°C and kept constant. When all the resin is dissolved, a sample is taken and characterized. The solids and pH are adjusted, if necessary. The batch is cooled and cast.

| EXAMPLE 5 | | |
|---|---|---|
| | Parts by Weight | |
| A | 13.70 | Gum Rosin (WW) |
| B | 3.80 | Fumaric Acid |
| C | 17.50 | Macromelt 6238 (Henkel) |
| D | 6.03 | Ammonia (29%) |
| E | 58.97 | Deionized Water |
| | 100.00 | |

PROCEDURE

A laboratory reactor is charged with A. The heat and nitrogen are turned on. When A is partially melted the agitation is carefully applied to avoid charring. When A is completely fluid, B is added (120-130°C). The temperature is gradually raised to 200°C. It is kept at this level for 2 hours and 15 minutes. The distillate consisting of residual water and rosin oil is removed.

With the heat kept on. the item C is changed slowly to permit uninterrupted agitation and fluidity of the batch. After all of C is melted the temperature is raised to 235°C and kept at this level for one hour.

The solution of D and E is then added carefully with the heat and nitrogen blanket turned off and the reflux condenser with the cooling water turned on. A vigorous agitation is applied. The batch goes through the pasty, thick stage. Thereafter, it clears up as if going through the phase inversion. The product becomes a transparent aqueous solution. A sample is characterized and the batch is adjusted to the required pH and solids.

| EXAMPLE 6 | | |
|---|---|---|
| | Parts by Weight | |
| A | 18.32 | Gum Rosin (WW) |
| B | 4.29 | Maleic Anhydride |
| C | 22.63 | Polyamide GAX-340 (Henkel) |
| D | 4.76 | Diethanolamine |
| E | 50.00 | Ethyl Alcohol (denatured) |
| | 100.00 | |

## PROCEDURE

A Laboratory reactor is charged with A. The heat and nitrogen are turned on. When A is partially melted, the agitation is carefully applied to avoid charring. When A is completely fluid, B is added at about 120-130°C, with heat turned off. The temperature rises to about 160-175°C. The heat is reapplied and the temperature is raised to 200°C. It is kept at this level for 2 hours. With the heat turned on the item C is gradually charged into reactor to permit uninterrupted agitation and fluidity of the batch. After all of C is melted; the temperature is raised to 230°C and kept at this level for one hour.

The batch is then cooled to about 160°C and the item D is added. The temperature is raised gradually to 175-180°C and the distillate is collected. The acid number is determined. When it gets to 45 or lower, the batch is discharged.

The cold, hard resin is broken and charged back into reactor. E is added. A mild heat is applied. The agitation is started as soon as possible (below the boiling point of E). The temperature is raised to 70°C and kept constant. When all the resin is dissolved, a sample is taken and characterized. The solids are adjusted, if necessary. The batch is cooled. It is filtered and cast into drums.

| EXAMPLE 7 | | |
|---|---|---|
| | Parts by Weight | |
| A | 40.49 | Acintol R (Arizona) |
| B | 9.51 | Maleic Anhydride |
| C | 50.00 | Versamid 930 |
| | 100.00 | |

6

## PROCEDURE

A laboratory reactor is charged with A. The heat and nitrogen are turned on. When A is partially melted, the agitation is carefully applied to avoid charring. When A is complet. y fluid, B is added at about 120-130°C with the heat turned off. The temperature rises spontaneously to about 160-175°C. The heat is reapplied and the temperature is raised to 200°C. It is kept at this level for 2 hours. With the heat turned on item C is gradually charged into reactor to permit uninterrupted agitation and prompt melting of this resin. After all of C is melted the temperature is raised to 230°C and kept at this level for one hour. The batch is cast into drums and shipped for dissolution in a low boiling alcohol for a use in solvent inks for surface printing on plastics.

| EXAMPLE 8 | | |
|---|---|---|
| | Parts by Weight | |
| A | 17.19 | Gum Rosin (WW) |
| B | 4.04 | Maleic Anhydride |
| C | 8.77 | Versamid 115 |
| D | 3.70 | Ammonia (29%) |
| E | 66.30 | Deionized Water |
| | 100.00 | |

## PROCEDURE

A laboratory reactor is charged with A. The heat and nitrogen are turned on. When A is partially melted, the agitation is carefully applied to avoid charring. When A is completely fluid, B is added at about 120-130°C, with the heat turned off. The temperature rises spontaneously to about 160-175°C. The heat is reapplied and the temperature is raised to 200°C. It is kept at this level far 2 hours.

With the mild heat kept on, item C is cautiously charged at a rate that keeps foaming under control and does not cause resolidification. After all of C is added, the temperature is raised to 230°C and kept at this level for one hour. The resin is cast and cooled down.

The cold, hard resin is broken and charged into reactor. The solution of D and E is added. A mild heat is applied. The agitation is started as soon as possible (below the boiling point of solution). The temperature is raised to about 70-80°C and kept constant. When all the resin is dissolved, a sample is taken and characterized. The solids and pH are adjusted, if necessary. The batch is cooled. Than it is filtered and cast into plastic containers.

The hard resin can also be dissolved in a low boiling alcohol for the use as a vehicle in solvent inks for printing on plastic films.

7

| EXAMPLE 9 | | |
|---|---|---|
| | Parts by Weight | |
| A | 11.36 | Gum Rosin (WW) |
| B | 2.67 | Maleic Anhydride |
| C | 20.98 | Macromelt 6238 |
| D | 2.89 | Ammonia (29%) |
| E | 20.44 | Deionized Water |
| F | 2.89 | Ammonia (29%) |
| G | 38.77 | Deionized Water |
| | 100.00 | |

## PROCEDURE

A laboratory reactor is charged with A. The heat and nitrogen are turned on. When A is partially melted, the agitation is carefully applied to avoid charring. When A is completely fluid, B is added at about 120-130°C, with the heat turned off. The temperature rises spontaneously to about 160-175°C. The heat is reapplied and the temperature is raised to 200°C. It is kept at this level for 2 hours. With the heat kept on, item C is gradually charged into reactor to permit uninterrupted agitation and prompt melting of this resin. After all of C is melted, the temperature is raised to 230°C and kept at this level for one hour. The solution of D and E is then added carefully with the heat and nitrogen blanket turned off and the reflux condenser, with the cooling water, turned on. A vigorous agitation is applied. The batch goes through the pasty thick stage, with some foaming in the initial stages of D and E addition.

The batch is then discharged by gravity and pumped into holding tank, equipped with agitation and heating system that contains the F and G solution preheated to about 75°C. When the batch clears up and becomes uniform, a sample is taken and characterized. The solids and pH are adjusted, if necessary. The batch is filtered and cast.

The hard resin can also be cast and dissolved in a low boiling alcohol for the use as a vehicle for solvent inks for printing on polyolefin films.

| EXAMPLE 10 | | |
|---|---|---|
| | Parts by Weight | |
| A | 11.01 | Gum Rosin (WW) |
| B | 2.58 | Maleic Anhydride |
| C | 20.38 | Macromelt 6238 (Henkel) |
| D | 1.03 | Citric Acid |
| E | 4.66 | Ammonia (29%) |
| F | 60.34 | Deionized Water |
| | 100.00 | |

## PROCEDURE

A laboratory reactor is charged with A. The heat and nitrogen are turned on. When A is partially melted the agitation is carefully applied to avoid charring. When A is completely fluid, B is added at about 120-130°C, with the heat turned off. The temperature rises spontaneously to about 160-175°C. It is kept at this level for two hours. With the heat turned on, item C is gradually charged into reactor to permit uninterrupted agitation and prompt melting of this resin. After all of C is melted, the temperature is raised to 230°C and kept at this level for 1 hour. The temperature is lowered to 175°C. Item D is charged gradually to avoid excessive foaming. The temperature is gradually raised to 230°C and kept at this level for 15 minutes. The solution of E and F is then added carefully with the heat and nitrogen blanket turned off and the reflux condenser with the cooling water turned on. A vigorous agitation is applied The batch goes through the pasty, thick stage. Thereafter, it clears up and the product becomes an aqueous solution. A sample is characterized. The batch is adjusted to the desired pH and solids. It is filtered and cast.

Example 11

a) Preparation of Rosinated Polyamide

45.23 parts of maleated rosin were mixed with 45.23 parts of a polyamide resin (Versamid 930) and heated at 240°C for 5 minutes and then 9.54 parts of diethanolamine were added. The mixture was heated at 180°C for 10 minutes. A modified rosinated polyamide was formed.

The following were blended together:

| b) Preparation of Varnish Blend | |
|---|---|
| The following were blended together: | |
| Parts | |
| 56.0 | Fortified Latex Lucidene® 604 (Styrene/Acrylic ester/acrylic acid copolymer) |
| 20.0 | Modified Polyamide of Example 11 |
| 4.0 | Wax Compound (polyethylene) |
| 20.0 | n-Propanol |
| 100.00 | |

c) The varnish blend of Example 11b was then used to prepare ink compositions. The ratio used to prepare the inks was 50 parts of the varnish blend of Example 11b blended with 50 parts of the following acrylic water-based inks.

| c1) Rubine Base (Red) | |
|---|---|
| Parts | |
| 47.0 | Water |
| 36.0 | Styrene/Maleic Anhydride 1:1 Copolymer Rubine Chip |
| 5.0 | Ammonium hydroxide |
| 1.0 | Defoamer (glycol) |
| 1.0 | Amine |
| 10.0 | Water |
| 100.00 | |

| c2) Red Shade Cyan Blue Base | |
|---|---|
| Parts | |
| 47.0 | Water |
| 36.0 | Styrene Maleic Anhydride Copolymer Blue Chip |
| 5.0 | Ammonium hydroxide |
| 1.0 | Defoamer (glycol) |
| 100.00 | |

| c3) Green Shade Cyan Blue | |
|---|---|
| Parts | |
| 50.0 | Water |
| 36.0 | Styrene Maleic Anhydride Copolymer Blue Chip |
| 1.0 | Ethanolamine |
| 6.0 | Ammonium hydroxide |
| 1.0 | Defoamer (glycol) |
| 6.0 | Water |
| 100.00 | |

| c4) H.R. Yellow Base | |
|---|---|
| Parts | |
| 52.0 | Water |
| 36.0 | Styrene/Maleic Anhydride Copolymer Yellow Chip |
| 1.0 | Ethanolamine |
| 6.0 | Ammonium hydroxide |
| 1.0 | Defoamer (glycol) |
| 4.0 | Water |
| 100.00 | |

| c5) AAOT Diarylide Yellow | |
|---|---|
| Parts | |
| 52.0 | Water |
| 36.0 | Styrene/Maleic Anhydride Copolymer Yellow Chip |
| 1.0 | Defoamer |
| 6.0 | Ammonium hydroxide |
| 1.0 | Ethanolamine |
| 4.0 | Water |
| 100.00 | |

d) The Rubine Base (Red) (c1) and the Red Shade Cyan Blue Base (c2) were printed onto treated (stretched) polyethylene using an anilox roll. Press speeds of 700 to 1,000 fpm were used to apply the ink. Both water-borne inks exhibited excellent gloss and had no pinholes. Scotch tape adhesion performance was found to be excellent for both inks.

10

**Claims**

1. A modified carboxylated polyamide composition obtainable by fusing a mixture of a polyamide (A) and an organic compound (B) containing carboxyl groups at a temperature of about 180-250°C.

2. A modified carboxylated polyamide composition according to claim 1, wherein compound (B) is an adduct of rosin and an olefinically unsaturated organic acid or its anhydride.

3. A modified carboxylated polyamide composition according to claim 1 or 2, wherein compound (B) is a maleated, fumarated, itaconated or acrylated rosin.

4. A modified carboxylated polyamide composition according to claim 1, wherein compound (B) is a styrene/maleic anhydride copolymer.

5. A process for the manufacture of a modified carboxylated polyamide composition comprising the fusing of a mixture of a polyamide (A) and an organic compound containing carboxyl groups (B) at a temperature of 180-120°C.

6. An aqueous solution or dispersion of a salt of a modified carboxylated polyamide composition as claimed in claim 1 obtainable by neutralizing at least some of the carboxyl groups with ammonia or an amine and dissolving in water.

7. Printing inks containing a modified carboxylated polyamide composition according to claim 1 or a salt thereof as binder.

8. Water-borne printing inks containing as binders a mixture of an ammonium or amine salt of a modified carboxylated polyamide composition according to claim 1 and of a water-soluble ammonium or amine salt of a carboxyl-group-containing styrene and/or acrylic copolymer having a glass temperature in the range of from +20 to +105°C and a molecular weight in the range of from 30,000 to 300,000.